# EUROPEAN PATENT APPLICATION

(11) **EP 4 414 505 A1**
(43) Date of publication of application: **14.08.2024**
(21) Application number: 24156201.6
(22) Date of filing: 07.02.2024
(51) Int. Cl.: E02F 9/20, B60K 6/485, B60L 58/25

(54) **WORK MACHINE CONTROL METHOD, WORK MACHINE CONTROL PROGRAM, WORK MACHINE CONTROL SYSTEM, AND WORK MACHINE**

(30) Priority: 10.02.2023 JP 2023018835
(71) Applicant: Yanmar Holdings Co., Ltd., Osaka-shi, Osaka (JP)
(72) Inventor: ONITSUKA, Kosuke, Chikugo-shi (JP)
(74) Representative: Dennemeyer & Associates S.A.

(57) **Abstract**

Provided is a work machine control method, a work machine control program, a work machine control system, and a work machine that allow an operator to easily grasp the state of a secondary battery.

The work machine control method includes executing relevant control regarding at least one of charging and discharging of the secondary battery of the work machine in accordance with a temperature of the secondary battery; and displaying relevant control information (first information G41 and second information Im3) on the relevant control.

## Description

### TECHNICAL FIELD

The present invention relates to a work machine control method, a work machine control program, and a work machine control system that are used for a work machine including a secondary battery, and a work machine.

### BACKGROUND ART

As a related technology, there is known a work machine (construction machine) including an electric motor that drives a hydraulic pump and a secondary battery (power storage device) that supplies electric power to the electric motor (for example, see Patent Document 1). The work machine according to the related technology further includes a charger that charges the secondary battery and a control device that controls the charger. The control device determines, on the basis of at least the temperature of the secondary battery, whether or not to perform a warm-up operation in which charging and discharging of the secondary battery are repeated. The control device then executes the warm-up operation by changing the magnitudes of the charging current and the discharging current during the warm-up operation in accordance with the relationship between the temperature of the secondary battery and the charging rate of the charger.

### PRIOR ART DOCUMENT

### PATENT DOCUMENT

Patent Document 1: JP 2022-153098 A

### SUMMARY OF INVENTION

### TECHNICAL PROBLEM

In the related technology described above, for example, since a warm-up operation is executed when the temperature of the secondary battery is low in winter or the like, a situation may occur in which the secondary battery is not actually charged for the warm-up operation even though the operator intends to charge the secondary battery.

An object of the present invention is to provide a work machine control method, a work machine control program, a work machine control system, and a work machine that allow an operator to easily grasp the state of the secondary battery.

### SOLUTION TO PROBLEM

A work machine control method according to one aspect of the present invention includes: executing relevant control regarding at least one of charging and discharging of a secondary battery of a work machine in accordance with a temperature of the secondary battery; and displaying relevant control information on the relevant control.

A work machine control program according to one aspect of the present invention is a program for causing one or more processors to execute the work machine control method.

A work machine control system according to one aspect of the present invention includes a relevant control processing unit and a display processing unit. The relevant control processing unit executes relevant control regarding at least one of charging and discharging of a secondary battery of a work machine in accordance with the temperature of the secondary battery. The display processing unit displays relevant control information on the relevant control.

A work machine according to one aspect of the present invention includes the work machine control system and a machine body on which a display device displaying the relevant control information is installed.

### ADVANTAGEOUS EFFECTS OF INVENTION

According to the present invention, it is possible to provide a work machine control method, a work machine control program, a work machine control system, and a work machine that allow an operator to easily grasp the state of the secondary battery.

### BRIEF DESCRIPTION OF DRAWINGS

FIG. 1 is a perspective diagram schematically illustrating an overall configuration of a work machine according to a first embodiment.
FIG. 2 is a schematic diagram illustrating a hydraulic circuit and the like of the work machine according to the first embodiment.
FIG. 3 is an external diagram schematically illustrating a display device on which a display screen is displayed by a work machine control system according to the first embodiment.
FIG. 4 is a diagram illustrating an example of the display screen displayed by the work machine control system according to the first embodiment.
FIG. 5 is a diagram illustrating an example of a first display screen displayed by the work machine control system according to the first embodiment.
FIG. 6 is a diagram illustrating an example of a second display screen displayed by the work machine control system according to the first embodiment.
FIG. 7 is a diagram illustrating an example of a third display screen displayed by the work machine control system according to the first embodiment.
FIG. 8 is a flowchart illustrating an operation example of the work machine control system according to the first embodiment.

### DESCRIPTION OF EMBODIMENTS

Embodiments of the present invention will now be described with reference to the accompanying drawings. The following embodiments are merely examples that embody the present invention and thus are not intended to limit the technical scope of the present invention.

### First Embodiment

### Overall Configuration

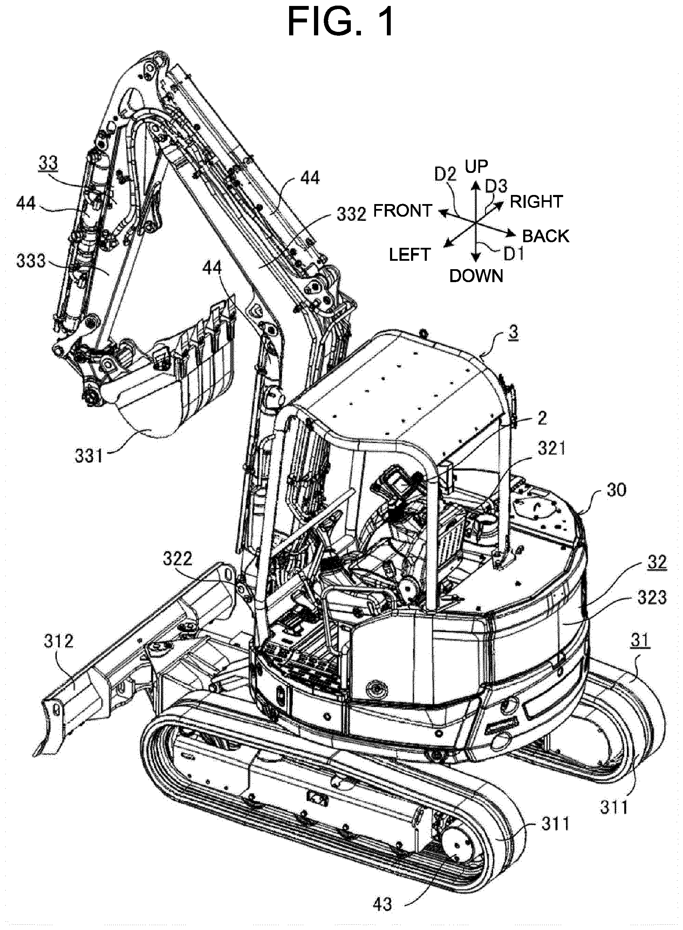

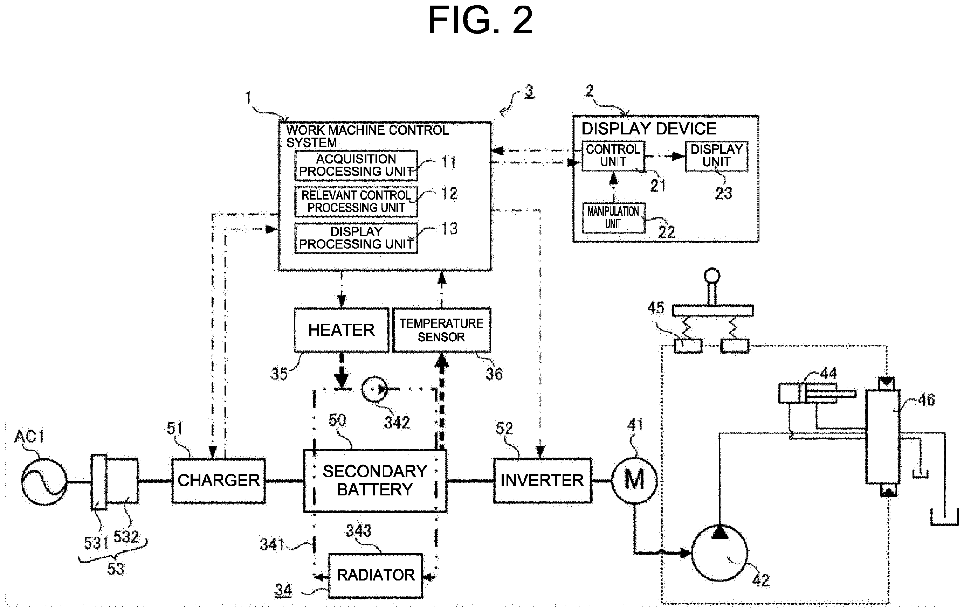

A work machine 3 according to the present embodiment includes a machine body 30 provided with a traveling section 31, a turning section 32, and a work section 33, as illustrated in FIG. 1. As illustrated in FIG. 2, the work machine 3 further includes a work machine control system 1 (hereinafter also simply referred to as a "control system 1").

The term "work machine" in the present disclosure refers to a machine for performing various types of work, and examples thereof include work vehicles, such as a backhoe (including a hydraulic excavator and a mini excavator), a wheel loader, and a carrier. The work machine 3 includes the work section 33 capable of performing one or more types of work.
The work machine 3 is not limited to "vehicles" and may be, for example, a working vessel, a working projectile, such as a drone or a multicopter, or the like. Furthermore, the work machine 3 is not limited to a construction machine (construction equipment), but may also be an agricultural machine (agricultural equipment), such as a rice transplanter, a tractor, or a combine harvester. In the present embodiment, unless otherwise specified, a case where the work machine 3 is a backhoe with a lifting function (with a crane function) and can perform excavation work, ground leveling work, trenching work, or loading work as well as lifting work is taken as an example.

According to the present embodiment, for convenience of description, a vertical direction in a state where the work machine 3 is usable is defined as a top-bottom direction D1. Furthermore, a front-rear direction D2 and a left-right direction D3 are defined with reference to the direction seen by a user (operator) riding on (a driving section 321 of) the work machine 3 in a non-turning state of the turning section 32. In other words, the individual directions used in the present embodiment are defined with reference to the machine body 30 of the work machine 3, and a direction in which the machine body 30 moves when the work machine 3 moves forward is a "front direction" while a direction in which the machine body 30 moves when the work machine 3 moves backward is a "rear direction." Similarly, a direction in which a front end portion of the machine body 30 moves when the work machine 3 turns right is a "right direction" and a direction in which the front end of the machine body 30 moves when the work machine 3 turns left is a "left direction." However, these directions are not intended to limit a use direction (a direction in use) of the work machine 3.

In the work machine 3 according to the present embodiment, at least a portion of a drive unit that generates power is motorized. As one example in the present embodiment, the work machine 3 is an electric work machine having a power source including a motor 41 (see FIG. 2), which is an electric motor, in a drive mechanism. The motor 41 is supplied with electric power (electric energy) to generate power. More specifically, the motor 41 is an AC motor (AC electric motor) that is driven by AC power.

The motor 41 operates by receiving power supply from a secondary battery 50 (see FIG. 2) mounted on the machine body 30. The power generated by the motor 41 is used at least for driving a hydraulic pump 42 (see FIG. 2) in the drive unit. In the present embodiment, the motor 41 can also be used as a generator, and performs, for example, a power generation operation of converting power (rotational force) applied to an output shaft of the motor 41 during deceleration or the like into electric power (electric energy). The electric power generated by the motor 41 is used, for example, to charge the secondary battery 50. A drive mode and a power generation mode of the motor 41 are switched by an integrated controller that comprehensively controls the work machine 3.

In the work machine 3, the hydraulic pump 42 is driven by the motor 41, and hydraulic oil is supplied from the hydraulic pump 42 to hydraulic actuators (including hydraulic motors 43 and a hydraulic cylinders 44 and the like) of the various sections of the machine body 30, thereby to drive the machine body 30. The work machine 3 is controlled, for example, by the user (operator), who is seated in the driving section 321 of the machine body 30, manipulating a manipulation lever and the like of a manipulation device.

In the present embodiment, it is assumed that the work machine 3 is the riding type backhoe as described above; thus, the work section 33 is driven in accordance with the manipulation by the user (operator) riding on the driving section 321, thereby to perform the work such as excavation. The driving section 321 in which the user is seated is provided at the turning section 32. In the example of FIG. 1, a canopy type driving section 321 is illustrated, but the driving section 321 is preferably a cabin type. The cabin-type driving section 321 includes a cabin, and the user boards in a cabin space inside the cabin. The canopy-type driving section 321 includes a canopy (roof), and the user boards in a space below the canopy. Furthermore, the driving section 321 is not limited to the cabin type and the canopy type, and may be, for example, a floor type or the like in which a cabin, a canopy, and the like are not provided, and a user boards in a space opened upward.

The traveling section 31 has a traveling function and is capable of traveling (also turning) on the ground. The traveling section 31 includes, for example, left and right crawlers 311 and a blade 312. The traveling section 31 further includes the travel-directed hydraulic motor 43 (hydraulic actuator) and the like for driving the crawlers 311.

The turning section 32 disposed on the traveling section 31 and is capable of turning, relative to the traveling section 31, about a rotation axis extending in a vertical direction. The turning section 32 includes a hydraulic motor (hydraulic actuator) for turning. The turning section 32 is equipped with the motor 41, the hydraulic pump 42, etc., in addition to the driving section 321. Moreover, a boom bracket 322 to which the work section 33 is attached is provided to a front end portion of the turning section 32.

The work section 33 is capable of performing work, including lifting work. The work section 33 is supported by the boom bracket 322 of the turning section 32 and performs the work. The work section 33 includes a bucket 331, a boom 332, and an arm 333. The work section 33 further includes hydraulic actuators (including the hydraulic cylinders 44 and hydraulic motors) for driving each section.

The bucket 331 is a type of attachment (work instrument) that is attached to the machine body 30 of the work machine 3, and is an optional instrument selected from among multiple types of attachments in accordance with the content of the work. As an example, the bucket 331 is detachable from the machine body 30 and replaced in accordance with the content of the work. Other than the bucket 331, the attachments for the work machine 3 include various instruments, such as a breaker, an auger, a crusher, a fork, a fork claw, a steel cutter, an asphalt cutter, a mower, a ripper, a mulcher, a tilt rotator, and a tamper. The work section 33 performs work by driving the bucket 331 with power from the drive unit.

The boom 332 is rotatably supported by the boom bracket 322 of the turning section 32. More specifically, the boom 332 is supported by the boom bracket 322 in a manner to be rotatable about a rotation axis along the horizontal direction. The boom 332 has a shape that extends upward from a proximal portion supported by the boom bracket 322. The arm 333 is coupled to a tip end of the boom 332. The arm 333 is supported to the boom 332 in a rotatable manner about a rotation axis along the horizontal direction. The bucket 331 is attached to a tip end of the arm 333.

The work section 33 moves by receiving power from the motor 41 serving as a power source. Specifically, the hydraulic pump 42 is driven by the motor 41, and hydraulic oil is supplied from the hydraulic pump 42 to the hydraulic actuators (hydraulic cylinders 44, etc.) of the work section 33, thereby causing the individual sections of the work section 33 (bucket 331, boom 332, and arm 333) to move.

In particular, in the present embodiment, the work section 33 has a multi-joint structure in which the boom 332 and the arm 333 are individually rotatable. That is, the boom 332 and the arm 333 each rotate about a rotation axis extending along the horizontal direction, so that the articulated work section 33 including the boom 332 and the arm 333, for example, is capable of performing operations such as extending and retracting as a whole.

Each of the traveling section 31 and the turning section 32 also move by receiving power from the motor 41 serving as a power source, similarly to the work section 33. That is, the turning section 32 and the traveling section 31 are caused to move by supplying the hydraulic oil from the hydraulic pump 42 to the hydraulic motor 43 of the traveling section 31, the hydraulic motor of the turning section 32, and the like.

Here, the motor 41 as well as the hydraulic pump 42, etc., are installed in the turning section 32. The motor 41 is driven by the electric power supplied from the secondary battery 50 also mounted on the turning section 32.

FIG. 2 schematically illustrates a hydraulic circuit and an electrical circuit (an electrical connection relationship) of the work machine 3 according to the present embodiment. In FIG. 2, a solid line represents a high-pressure oil path (for the hydraulic oil), a dotted line represents a low-pressure oil path (for pilot oil), a bold solid line represents an electrical power path, and a one-dot chain arrow represents an electrical signal path. A bold arrow between the motor 41 and the hydraulic pump 42 represents a power transmission path, and a dashed arrow between a heater 35 and a coolant path 341 and a dashed arrow between a temperature sensor 36 and the secondary battery 50 represent a heat transmission path.

As illustrated in FIG. 2, the work machine 3 includes, in addition to the hydraulic pump 42, the hydraulic motors 43 (not illustrated in FIG. 2), and the hydraulic cylinders 44, a remote control valve 45, and a direction switching valve (control valve) 46, as hydraulic equipment. The work machine 3 further includes the secondary battery 50, a charger 51, an inverter 52, a cooling device 34, the heater 35, and the temperature sensor 36, as equipment related to the motor 41 that drives the hydraulic pump 42.

The hydraulic oil from the hydraulic pump 42, which is driven by the motor 41, is supplied to the hydraulic motor 43 of the traveling section 31, the hydraulic motor of the turning section 32, the hydraulic cylinders 44 of the work section 33, and the like. This drives the hydraulic actuators such as the hydraulic motor 43 and the hydraulic cylinders 44.

Each of the hydraulic actuators, such as the hydraulic cylinders 44, includes a pilot-type direction switching valve 46 capable of changing a direction and a flow rate of the hydraulic oil supplied from the hydraulic pump 42. The direction switching valve 46 is driven when the pilot oil serving as an input instruction is supplied from the pilot pump.

Here, the remote control valve 45 is provided, for example, in a supply path of the pilot oil to the direction switching valve 46 corresponding to the hydraulic cylinders 44 of the work section 33. The remote control valve 45 outputs a work manipulation instruction of the work section 33 in response to an operation of the manipulation lever. The work manipulation instruction instructs an expanding movement, a contracting movement, and the like of the work section 33.

Similarly, a remote control valve is also provided in a supply path of the pilot oil to a direction switch valve that corresponds to the hydraulic motor 43 of the traveling section 31. This remote control valve outputs a traveling manipulation instruction of the traveling section 31 in response to a manipulation of the manipulation lever. The traveling manipulation instruction instructs a travel movement (for example, forward movement or backward movement) of the traveling section 31. Furthermore, a remote control valve is also provided in a supply path of the pilot oil to a direction switching valve corresponding to the hydraulic motor of the turning section 32. This remote control valve outputs a turning manipulation instruction of the turning section 32 in response to a manipulation of the manipulation lever. The turning manipulation instruction instructs a turning movement (for example, left turning or right turning) of the turning section 32.

The motor 41 is an AC motor that is driven by AC power supplied from the inverter 52. The inverter 52 is electrically connected to the secondary battery 50 and converts a DC voltage, which is an output voltage of the secondary battery 50, into an AC voltage. An output terminal of the inverter 52 is electrically connected to the motor 41. Therefore, the inverter 52 converts a DC voltage applied from the secondary battery 50 into an AC voltage and outputs the AC voltage to the motor 41 to supply a three phase AC current to the motor 41, and thereby the motor 41, which is an AC motor, is driven. The inverter 52 is controlled by a control signal from the control system 1, and performs a power conversion operation in which DC power is converted into AC power in accordance with the control signal.

The secondary battery 50 is an example of a "power supply" that supplies DC power to the inverter 52 and the like. The secondary battery 50 is a chargeable and dischargeable power storage device (power storage battery), and is a lithium ion battery as an example in the present embodiment. In the secondary battery 50 of this type, an operating temperature range suitable for charging and discharging is determined by its temperature characteristics, and use (charging and discharging) outside the operating temperature range is not recommended. Therefore, for example, it is preferred that the charging of the secondary battery 50 is performed when the temperature of the secondary battery 50 is within the operating temperature range, and it is not preferred that the charging of the secondary battery 50 is performed in an environment in which the temperature of the secondary battery 50 is lower than the lower limit of the operating temperature range. In the present embodiment, the secondary battery 50 is mounted on the work machine 3 in a replaceable manner, but it is not essential for the secondary battery 50 to be replaceable.

An input terminal of the charger 51 can be electrically connected to an external power source AC1 via a connection device 53. An output terminal of the charger 51 is electrically connected to the secondary battery 50. As one example in the present embodiment, the external power source AC1 is an AC power supply such as a commercial power supply, and is not included in the components of the work machine 3. The connection device 53 includes a first connector 531 electrically connected to the external power source AC1 and a second connector 532 electrically connected to the charger 51. The connection device 53 is a device that detachably connects the first connector 531 and the second connector 532. Specifically, the second connector 532 is a plug connected to the charger 51 via a cable, and is connected to the first connector 531 formed of an outlet to electrically connect the charger 51 to the external power source AC1.

In this way, in a state in which the first connector 531 and the second connector 532 are connected to each other, the charger 51 converts an AC voltage supplied from the external power source AC1 into a DC voltage and applies the DC voltage to the secondary battery 50 to charge the secondary battery 50. The charger 51 is controlled by a control signal from the control system 1, and performs a power conversion operation in which AC power is converted into DC power in accordance with the control signal. The charger 51 has a current state of charge (SOC) monitoring function for monitoring the SOC of the secondary battery 50, and outputs a SOC signal regarding the SOC of the secondary battery 50 to the control system 1. Furthermore, the charger 51 outputs to the control system 1, a connection detection signal indicating whether or not the first connector 531 and the second connector 532 are connected to each other (that is, whether or not power is supplied from the external power source AC1).

The cooling device 34 is a device for maintaining the temperature of the secondary battery 50 within the operating temperature range by cooling the secondary battery 50. The cooling device 34 includes a coolant path 341, a pump 342, and a radiator 343. The coolant path 341 is thermally coupled to the secondary battery 50. The pump 342 and the radiator 343 are provided on the coolant path 341. The cooling device 34 drives the pump 342 to circulate a coolant such as cooling water through the coolant path 341, thereby performing heat exchange between the secondary battery 50 and the radiator 343 via the coolant and cooling the secondary battery 50.

The heater 35 is a device for heating the secondary battery 50. As one example in the present embodiment, the heater 35 indirectly heats the secondary battery 50 via the coolant of the cooling device 34. Specifically, the heater 35 is thermally coupled to the coolant path 341. The heater 35 is controlled by a control signal from the control system 1, generates heat in response to the control signal (when energized), and heats the coolant flowing through the coolant path 341. The coolant heated by the heater 35 is circulated through the coolant path 341 by the pump 342, thereby indirectly heating the secondary battery 50.

The temperature sensor 36 detects the temperature of the secondary battery 50. As one example in the present embodiment, the temperature sensor 36 is thermally coupled to the cells of the secondary battery 50. The temperature sensor 36 outputs a temperature measurement signal corresponding to the temperature of the secondary battery 50 to the control system 1.

The control system 1 is mainly composed of a computer system that includes one or more processors such as a central processing unit (CPU) and one or more types of memory such as read only memory (ROM) and random access memory (RAM), and executes various types of processing (information processing). In the present embodiment, the control system 1 is an integrated controller that comprehensively controls the work machine 3, and, for example, includes an electronic control unit (ECU). However, the control system 1 may be provided separately from the integrated controller. The control system 1 will be described in detail in the column "[2] Configuration of Control System."

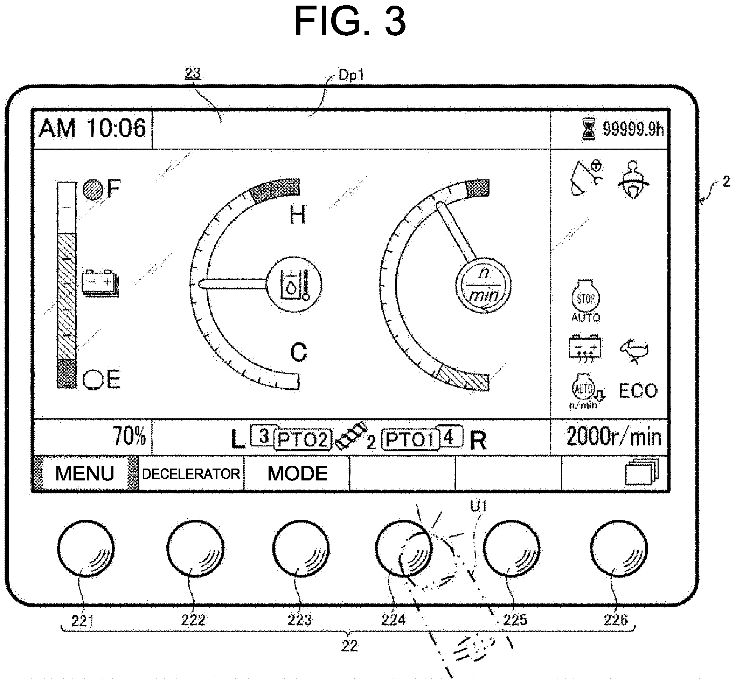

A display device 2 is placed in the driving section 321 of the machine body 30, and is a user interface that accepts a manipulation input by a user (an operator) and outputs various types of information to the user. The display device 2 accepts any of various manipulations from the user, for example, by outputting an electrical signal that corresponds to the user's manipulation. In this way, the user (operator) can view a display screen Dp1 (see to FIG. 3) displayed at the display device 2, and can manipulate the display device 2 as necessary.

As illustrated in FIG. 2, the display device 2 includes a control unit 21, a manipulation unit 22, and a display unit 23. The display device 2 is capable of communication with the control system 1 and can exchange data with the control system 1. As one example in the present embodiment, the display device 2 is a dedicated device used for the work machine 3.

The control unit 21 controls the display device 2 in accordance with the data from the control system 1. Specifically, the control unit 21 outputs an electrical signal corresponding to the user's operation accepted by the manipulation unit 22, and displays, on the display unit 23, the display screen Dp1 generated by the control system 1.

The manipulation unit 22 is a user interface for accepting a manipulation input by a user (an operator) to the display screen Dp1 displayed on the display unit 23. The manipulation unit 22 outputs an electrical signal corresponding to, for example, a manipulation by a user U1 (see to FIG. 3), thereby to accept various manipulations by the user U1. As one example in the present embodiment, the manipulation unit 22 includes multiple (six, here) of mechanical push-button switches 221 to 226, as illustrated in FIG. 3. The push-button switches 221 to 226 are placed along a peripheral edge of a display area of the display unit 23, in the vicinity of the display region (a lower portion in the example in FIG. 3). The push-button switches 221 to 226 are associated with items displayed on the display screen Dp1, which are described later, and when any of the push-button switches 221 to 226 are manipulated, a corresponding one of the items displayed on the display screen Dp1 is manipulated (selected).

The manipulation unit 22 may include a touch screen and a manipulation dial. Also in this case, any of the items displayed on the display screen Dp1 is manipulated (selected) by a manipulation performed on the manipulation unit 22.

The display unit 23 is a user interface that is for presenting information to the user U1 (operator), such as a liquid crystal display or organic EL display that displays various types of information. The display unit 23 presents various types of information to the user by means of display. As one example in the present embodiment, the display unit 23 is a full-color liquid crystal display with a backlight, and has a display area that is long in a transverse direction, as illustrated in FIG. 3.

The display device 2 presents various information on the display screen Dp1 to the user U1 (operator) who manipulates the work machine 3. That is, the user U1 who manipulates the work machine 3 can visually obtain various information related to the work machine 3 by viewing the display screen Dp1 displayed on the display device 2. As an example, the display device 2 displays information on an active state of the work machine 3, such as a hydraulic oil temperature, so that the user U1 can check, at the display device 2, the information on the active state of the work machine 3 that is necessary for manipulating the work machine 3. The display device 2 can display on the display screen Dp1 images of the areas around the work machine 3 captured by cameras mounted on the machine body 30. In this way, when manipulating the work machine 3, the user U1 (operator) can check, on the display screen Dp1 displayed on the display device 2, the situations, for example, on sides and the rear of the work machine 3, where there are likely to be blind spots from the driving section 321.

In addition to the above-mentioned components, the machine body 30 further includes the manipulation lever, a cutoff lever, and a communication terminal. Furthermore, the machine body 30 includes sensors for monitoring the active state of the machine body 30, such as a hydraulic oil temperature sensor, a tachometer to measure the rotating speed of the motor 41, sensors (including cameras) to monitor the surrounding of the machine body 30, and an hour meter to measure an activation time.

### Configuration of Control System

The configuration of the control system 1 according to the present embodiment will now be described with reference to FIG. 2. The control system 1 controls the respective components (including the display device 2, the charger 51, the inverter 52, and the heater 35) of the machine body 30 of the work machine 3. The control system 1 is a component of the work machine 3 and, together with the machine body 30, etc., constitutes the work machine 3. In other words, the work machine 3 according to the present embodiment includes at least the control system 1 and the machine body 30 (including the traveling section 31, the turning section 32, and the work section 33) on which the display device 2 is installed.

The control system 1 is used to control the work machine 3, and as illustrated in FIG. 2, includes an acquisition processing unit 11, a relevant control processing unit 12, and a display processing unit 13. As one example in the present embodiment, the control system 1 is mainly composed of a computer system having one or more processors; thus, the one or more processors, by executing a work machine control program, realize the above multiple functional units (acquisition processing unit 11, etc.). These functional units included in the control system 1 may be provided separately in multiple casings or may be provided in a single casing.

The control system 1 is capable of communication with a device provided to each component of the machine body 30. That is, the control system 1 is connected to at least the display device 2, the charger 51, the inverter 52, the heater 35, and the temperature sensor 36. As a result, the control system 1 can control the display device 2, the charger 51, the inverter 52, the heater 35, and the like, and can acquire a SOC signal or a connection detection signal from the chargers 51, or a temperature measurement signal from the temperature sensor 36. Here, the control system 1 may exchange various types of information (data) either directly or indirectly with each of the devices via a repeater or the like.

The acquisition processing unit 11 executes acquisition processing to regularly or irregularly acquire, from the machine body 30, various types of data including the SOC signal or the connection detection signal from the charger 51, and the temperature measurement signal from the temperature sensor 36. That is, the acquisition processing unit 11 acquires detection results (detection values) of various sensors including the SOC of the secondary battery 50, the presence or absence of a power supply from the external power source AC1, the temperature of the secondary battery 50, and the like. In the present embodiment, the acquisition processing unit 11 also acquires data indicating the temperature of the hydraulic oil (hydraulic oil temperature) and the like from the machine body 30. The data acquired by the acquisition processing unit 11 is stored, for example, in a memory.

The relevant control processing unit 12 executes relevant control regarding at least one of charging and discharging of the secondary battery 50 of the work machine 3 in accordance with the temperature of the secondary battery 50. The term "relevant control" in the present disclosure refers to various controls regarding at least one of charging and discharging of the secondary battery 50, and includes, for example, charging of the secondary battery 50 by controlling the charger 51, and discharging of the secondary battery 50 by controlling the inverter 52. Furthermore, temperature control of the secondary battery 50 for maintaining the temperature of the secondary battery 50 in an operating temperature range suitable for charging and discharging is also included in "relevant control." Specific examples of the temperature control of the secondary battery 50 include heating (warm-up operation) of the secondary battery 50 by controlling the heater 35, and cooling of the secondary battery 50 by controlling the cooling device 34.

The display processing unit 13 executes display processing of displaying the display screen Dp1 on (the display unit 23 of) the display device 2. Specifically, the display processing unit 13 displays at least relevant control information related to relevant control on the display screen Dp1 or the like displayed on the display device 2. The term "relevant control information" referred to in the present disclosure is various types of information on relevant control, and includes, for example, information such as whether or not the secondary battery 50 is being charged, whether or not the secondary battery 50 is being discharged, the SOC of the secondary battery 50, and the temperature of the secondary battery 50. Furthermore, the relevant control information includes information on temperature control of the secondary battery 50, such as whether or not the secondary battery 50 is being heated (warm-up operation).

In addition to the above-described configuration, the control system 1 includes a control processing unit that controls the machine body 30 in accordance with the manipulation of the manipulation lever or the like and a storage unit.

### Work Machine Control Method

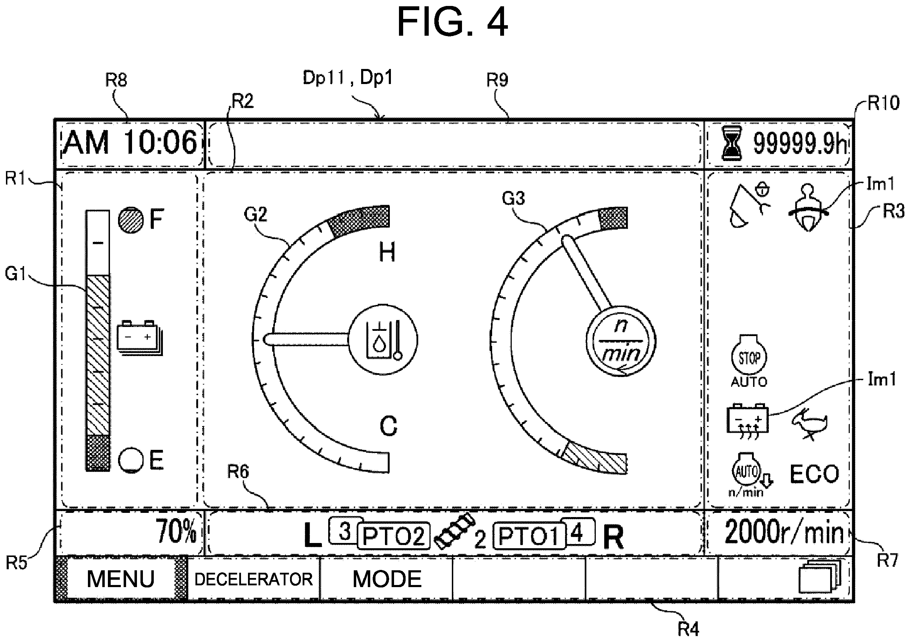

An example of a control method of the work machine 3 (hereinafter simply referred to as "control method" executed mainly by the control system 1 will now be explained with reference to FIGS. 4 to 8.

The control method according to the present embodiment is executed by the control system 1 that has the computer system as the main component, and thus, in other words, is embodied by the work machine control program (hereinafter simply referred to as a "control program"). That is, the control program according to the present embodiment is a computer program that causes one or more processors to execute each of processes related to the control method. Such a control program may be executed by the control system 1 and the display device 2 in cooperation with each other, for example.

Here, in the case where a preset specific start manipulation for executing the control program is performed, the control system 1 executes the following various types of the processing related to the control method. An example of the start-up manipulation is the start manipulation for the work machine 3, that is, an ON manipulation of a main switch. Meanwhile, when a preset specific termination manipulation is performed, the control system 1 ends the following various types of processing related to the control method. An example of the termination manipulation is a manipulation to stop the work machine 3, that is, an OFF manipulation of the main switch.

### Home Screen

First, a configuration of the display screen Dp1 displayed on the display unit 23 of the display device 2 by the control method according to the present embodiment will be described. In the drawings illustrating the display screen Dp1 displayed on the display unit 23 of the display device 2, such as FIG. 4, the dashed-dotted lines representing regions, the leading lines, and reference signs are provided merely for an illustrative purpose and may not be actually displayed at the display device 2.

The display screen Dp1 illustrated in FIG. 4 is a home screen Dp11 displayed by the control method.

The home screen Dp11 is the basic display screen Dp1 that is to be displayed at the display device 2 in the active state (a state in which the machine body 30 moves in response to a manipulation of the manipulation lever and the like). In accordance with a manipulation on the manipulation unit 22, the display screen Dp1 can shift from the home screen Dp11 to various display screens Dp1 including a menu screen.

As illustrated in FIG. 4, the home screen Dp11 includes a first region R1, a second region R2, a third region R3, a fourth region R4, a fifth region R5, a sixth region R6, a seventh region R7, an eighth region R8, a ninth region R9, and a tenth region R10.

Specifically, the display screen Dp1 is vertically (a top-bottom direction) divided into four regions.

The upper three regions are further divided into three regions in the transverse direction (a left-right direction). As a result, the display screen Dp1 is divided into ten regions in total. The second regions from the top include, from left to right, the first region R1, the second region R2, and the third region R3. The bottommost region is the fourth region R4. Moreover, the third regions from the top include, from left to right, the fifth region R5, the sixth region R6, and the seventh region R7, and the uppermost regions include, from left to right, the eighth region R8, the ninth region R9, and the tenth region R10. Among the four regions vertically divided, the vertical length of the second regions from the top (the first region R1, the second region R2, and the third region R3) is the largest. Among the three regions transversely divided, the transverse length of the middle regions (the second region R2, the sixth region R6, and the ninth region R9) is the largest.

However, the placement and size of the respective regions are merely examples and can be appropriately changed. The respective regions are not required to be clearly divided by a boundary line. For example, even in the example in FIG. 4, the second region R2 and the third region R3 are clearly divided by a boundary line, while there is no boundary line between the first region R1 and the second region R2. Of course, the first region R1 and the second region R2 may be clearly divided by a boundary line.

The first region R1 is a rectangular region extending in the vertical direction. In the first region R1, for example, current state information G1 on a current state of charge (SOC) of the secondary battery 50 is displayed. The display processing unit 13 generates the current state information G1 in the display screen Dp1 on the basis of the SOC signal and the like. In the present embodiment, the current state information G1 is a graph simulating an analog indicator that is long in the vertical direction.

The second region R2, which occupies most of the home screen Dp 11, is a rectangular region that is long in the transverse direction. In the control method according to the present embodiment, the second region R2 displays information on the active state of the work machine 3. As an example, the second region R2 displays hydraulic oil temperature information G2 and rotating speed information G3. The display processing unit 13 generates the hydraulic oil temperature information G2 in the display screen Dp1 (the home screen Dp11) on the basis of an output of the hydraulic oil temperature sensor. Similarly, the display processing unit 13 generates the rotating speed information G3 in the display screen Dp1 (the home screen Dp11) on the basis of an output of the tachometer.

In the present embodiment, the hydraulic oil temperature information G2 and the rotating speed information G3 are both graphs that simulate analog meters. In an analog meter, a needle rotates, and a value is presented by a position of the needle. That is, the hydraulic oil temperature information G2 is information that indexes the hydraulic oil temperature included in the active state of the work machine 3, showing the hydraulic oil temperature by the position of the needle of the graph. Similarly, the rotating speed information G3 is information that indexes the speed of the motor 41 of the work machine 3, showing the speed by the position of the needle of the graph. An advantage of the graphical display of the hydraulic oil temperature information G2 and rotating speed information G3 is that the graphical display is highly visible to the user, and the user can intuitively perceive the active state of the work machine 3. The hydraulic oil temperature information G2 and the rotating speed information G3 are not limited to information showing the hydraulic fluid temperature and the rotating speed by numerical values or the like, but may be information indicating the hydraulic fluid temperature and the rotating speed in a stepwise manner by, for example, a pattern such as a graphic image (icon).

The third region R3 is a rectangular region that is long in the vertical direction. The third region R3 displays a graphic image (icon) Im1 showing whether each function of the work machine 3 is enabled/disabled, and abnormal/normal, etc. The third region R3 can display multiple graphic images Im1, and expresses designs (pictures) of the individual graphic images Im1 show a function regarding, for example, a seat belt, a hydraulic oil temperature, and the like. Here, each of the graphic images Im1 shows, for example, whether each function is enabled/disabled, and abnormal/normal, etc., by a display mode, such as display/non-display, display color, size, etc. The display processing unit 13 uses output of a variety of sensors (including the hydraulic oil temperature sensor) that sense an active state of each component of the work machine 3, and determines the state of each component of the work machine 3. When any of the functions is enabled, the display processing unit 13 displays that the function is enabled (or in operation) by changing the display mode of the graphic image Im1 corresponding to the function. Similarly, when an abnormal value is detected in any part, the display processing unit 13 presents a warning display by changing the display mode such as the display color or the like of the graphic image Im1 of the part.

The fourth region R4 is a band-shaped region that extends across an entire width of the home screen Dp11. The fourth region R4 displays items for a manipulation on the display screen Dp1. In FIG. 4, as an example, multiple items such as "MENU," "DECELERATOR," and "MODE" are arranged in the fourth region R4. With these items, multiple push-button switches 221 to 226 of the manipulation unit 22 located immediately below them are associated. For example, the item "MENU" is associated with the push-button switch 221, and the item "DECELERATOR" is associated with the push-button switch 222. Therefore, for example, when the push-button switch 223 corresponding to the item "MODE" is manipulated by the user U1, the item "CAMERA" is manipulated (selected).

Furthermore, in the present embodiment, any of the items is highlighted in the fourth region R4 so as to correspond to a manipulation of a manipulation dial (or a cursor key) of the manipulation unit 22.

In the example illustrated in FIG. 4, the item "MENU" is highlighted, and the item that is highlighted is switched by a manipulation of the manipulation dial (or cursor key) and the like. The user U1 can select a desired item by manipulating a determination button in a state where the desired item is highlighted. Therefore, for example, when the determination button is manipulated in a state where the highlighted display has been moved to the item "MODE," the item "MODE" is manipulated (selected). When the manipulation unit 22 includes the touch screen, the user U1 can select the desired item by touching the desired item on the home screen Dp11.

The fifth region R5 displays, for example, charging information on the charged state of the secondary battery 50. The charging information includes a graphic image (icon) indicating that charging is in progress, information indicating the state of charge (SOC) ("70%" in the example of FIG. 4), and the like. The sixth region R6 displays, for example, information on the work section 33 that is activated in the work machine 3. The seventh region R7 displays, for example, information on an active state of the work machine 3, such as a rotating speed and the like of the motor 41. The eighth region R8 displays, for example, the current time. The ninth region R9 displays, for example, information indicating the item to which the currently displayed display screen Dp1 belongs. The tenth region R10 displays, for example, information to the activation time (hour meter) of the work machine 3.

### Charging Operation

An operation (charging operation) particularly regarding charging of the secondary battery 50 in the control method according to the present embodiment will now be described in detail.

In the present embodiment, as described above, when the first connector 531 and the second connector 532 are connected to each other, the work machine 3 enters a state in which electric power can be supplied from the external power source AC1 to the charger 51.

In this state, if the secondary battery 50 is not in a fully charged state and a charging condition such as the temperature of the secondary battery 50 being within the operating temperature range is satisfied, the control system 1 controls the charger 51 to charge the secondary battery 50 (enters a "charging mode"). When the secondary battery 50 is in a fully charged state, the charging condition is not satisfied, and thus the control system 1 controls the charger 51 to end the charging of the secondary battery 50. In the present embodiment, in a state in which the first connector 531 and the second connector 532 are connected to each other, the work machine 3 prohibits the operation of the machine body 30 (including the traveling section 31, the turning section 32, and the work section 33).

When a predetermined specific charging stop manipulation is performed during the charging of the secondary battery 50, the charging is stopped even if the secondary battery 50 has not reached the fully charged state. While the connection between the first connector 531 and the second connector 532 is locked during the charging of the secondary battery 50, the locking can be released and the first connector 531 and the second connector 532 can be disconnected by performing such the charging stop manipulation. Here, as an example, it is assumed that the charging stop manipulation is a pressing manipulation of a charging stop switch (which may be a physical switch or a virtual switch displayed on the display device 2).

The control method according to the present embodiment includes executing relevant control regarding at least one of charging and discharging of the secondary battery 50 in accordance with the temperature of the secondary battery 50 of the work machine 3, and displaying relevant control information relating to the relevant control. Here, since the charging operation will be explained, it is assumed that the relevant control is at least control regarding charging of the secondary battery 50. Specifically, the relevant control is various types of control regarding charging of the secondary battery 50, and includes a charging operation of the secondary battery 50 by controlling the charger 51, and temperature control (warm-up operation) of the secondary battery 50 for maintaining the temperature of the secondary battery 50 within an operating temperature range suitable for charging.

That is, according to the present embodiment, even in a state where electric power can be supplied from the external power source AC1 to the charger 51, for example, when the temperature of the secondary battery 50 is low in winter or the like, the secondary battery 50 is not charged immediately, but the warm-up operation is executed first. In such a case, it is possible to notify the user U1 (operator) of a situation in which the secondary battery 50 is not actually charged due to the warm-up operation by displaying the relevant control information. As a result, it is possible to provide a work machine control method, a work machine control program, a control system 1, and a work machine 3 that allow an operator to easily grasp the state of the secondary battery 50.

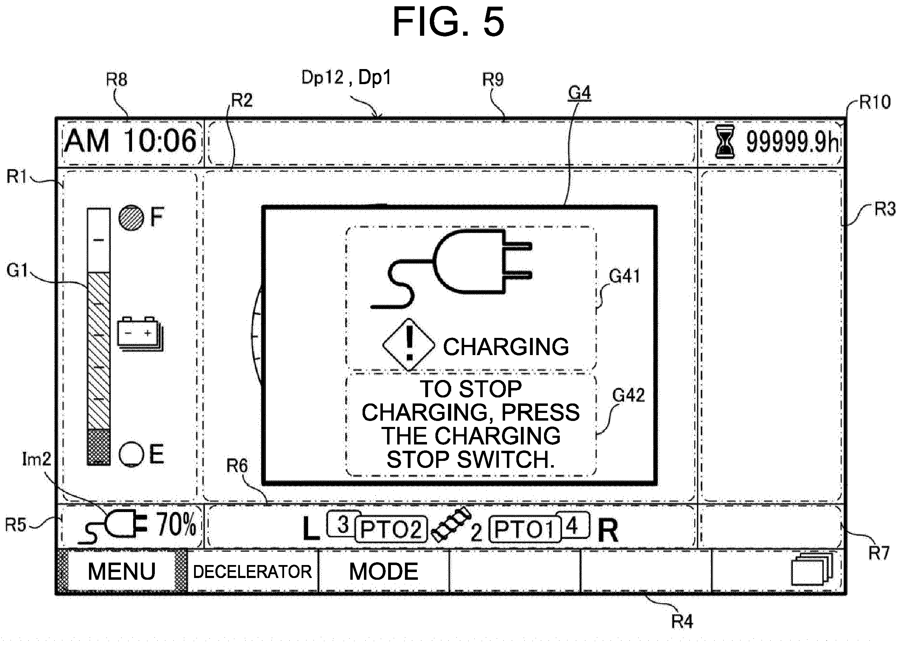

More specifically, when the relevant control is executed, the control system 1 according to the present embodiment causes the display device 2 to display the display screen Dp1 including the relevant control information, as illustrated in FIGS. 5 to 7. In the examples of FIGS. 5 to 7, a pop-up window such as a charging window G4 or a warm-up window G5 including relevant control information is superimposed and displayed on the second region R2 of the home screen Dp11. Such a display screen Dp1 is merely an example of the display mode of the relevant control information, and is not intended to limit the specific display mode of the relevant control information.

Here, the relevant control is executed in accordance with the temperature of the secondary battery 50, and a first temperature, a second temperature, and a third temperature can be set as threshold temperatures to be compared with the temperature of the secondary battery 50. The first temperature is a lower limit of the operating temperature range suitable for charging the secondary battery 50. The second temperature is an upper limit of a temperature range at which the warm-up operation of the secondary battery 50 should be started, and the third temperature is a temperature at which the warm-up operation of the secondary battery 50 should be ended. Each of the first temperature, the second temperature, and the third temperature can be set to any value. For example, the first temperature may be higher than the second temperature, may be the same as the second temperature, or may be lower than the second temperature. As an example, in the present embodiment, it is assumed that the first temperature is "0°C," the second temperature is "5°C," and the third temperature is "5°C." That is, the first temperature is lower than the second temperature, and the third temperature is the same as the second temperature.

A first display screen Dp12 illustrated in FIG. 5 is the display screen Dp1 when the temperature of the secondary battery 50 is equal to or higher than the second temperature (here, "5°C"). That is, according to the temperature condition in which the first display screen Dp12 is displayed, since the temperature of the secondary battery 50 is equal to or higher than the first temperature (here, "0°C"), the secondary battery 50 is charged unless it is in a fully charged state, and the warm-up operation is not performed. On the first display screen Dp12, a charging window G4 indicating that the secondary battery 50 is being charged is displayed on the second region R2. Moreover, on the first display screen Dp12, a connecting icon Im2 indicating that the first connector 531 and the second connector 532 are connected to each other is displayed in the fifth region R5. On the first display screen Dp12, the third region R3 and the seventh region R7 are blank.

The charging window G4 includes first information G41 including a graphic image (icon) and a text ("CHARGING" in the example of FIG. 5) indicating that the secondary battery 50 is being charged, and guidance information G42. Here, the guidance information G42 is information for guiding the user U1 how to stop the charging of the secondary battery 50, and in FIG. 5, the guidance information G42 includes a text "TO STOP CHARGING, PRESS THE CHARGING STOP SWITCH SW." That is, the control method according to the present embodiment further includes displaying the guidance information G42 on how to stop the charging of the secondary battery together with the first information G41. In this way, the user U1 can easily grasp that the secondary battery 50 is being charged and the manipulation for stopping the charging. Therefore, for example, when the machine body 30 needs to be operated during the charging of the secondary battery 50, the user U1 can easily cancel the connection between the first connector 531 and the second connector 532 by performing the charging stopping manipulation.

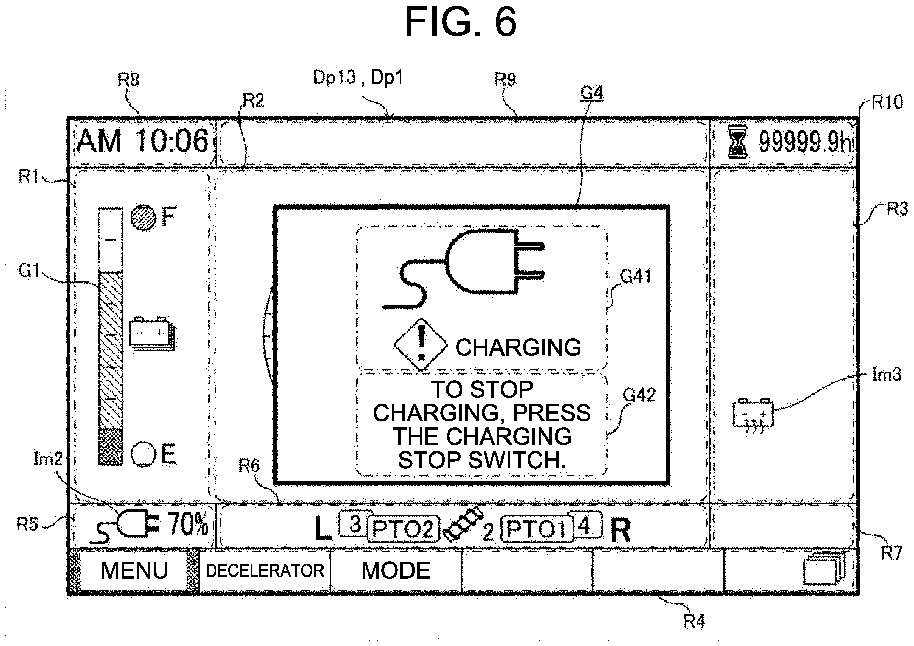

A second display screen Dp13 illustrated in FIG. 6 is the display screen Dp1 when the temperature of the secondary battery 50 is equal to or higher than the first temperature (here, "0°C") and lower than the second temperature (here, "5°C"). That is, according to the temperature condition in which the second display screen Dp13 is displayed, if the secondary battery 50 is not in the fully charged state, the secondary battery 50 is charged and the warm-up operation is performed. On the second display screen Dp13, similarly to the first display screen Dp12, the charging window G4 is displayed on the second region R2, and the connecting icon Im2 is displayed in the fifth region R5. On the second display screen Dp13, the seventh region R7 is blank.

Furthermore, the third region R3 on the second display screen Dp13 displays second information Im3 including a graphic image (icon) indicating that the heater 35 is being driven (operated). The second information Im3 is information indicating that the heater 35 is driven and the warm-up operation is being performed. Here, since the charging window G4 including the first information G41 is displayed inside the second region R2, the second information Im3 displayed in the third region R3 is not hidden by the charging window G4. Therefore, on the second display screen Dp13, the first information G41 and the second information Im3 are displayed as a list along the transverse direction.

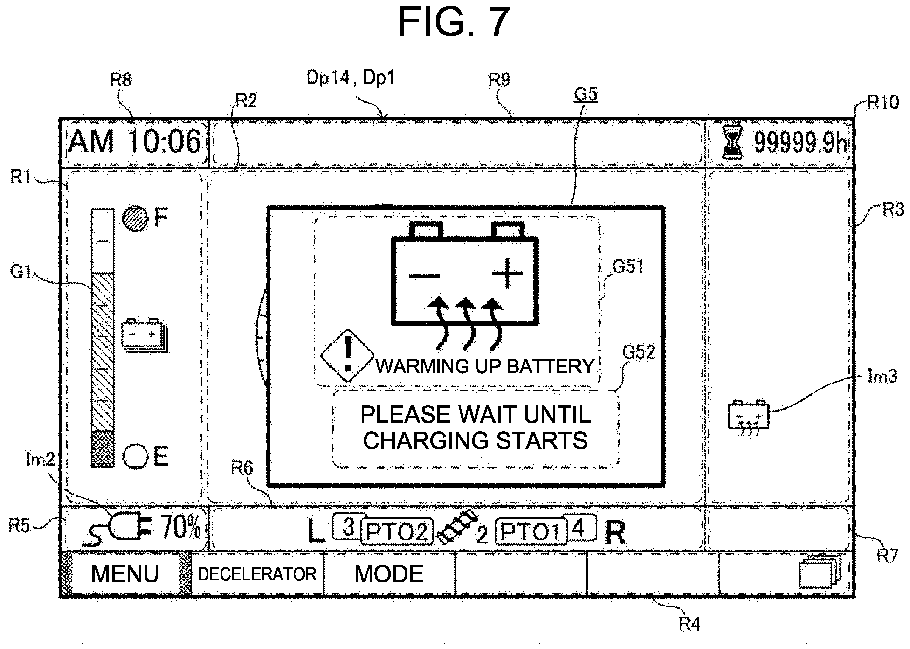

A third display screen Dp14 illustrated in FIG. 7 is the display screen Dp1 when the temperature of the secondary battery 50 is lower than the first temperature (here, "0°C"). That is, according to the temperature condition in which the third display screen Dp14 is displayed, since the temperature of the secondary battery 50 is lower than the second temperature (here, "5°C"), the secondary battery 50 is not charged even when not in a fully charged state, and the warm-up operation is performed.

On the third display screen Dp14, similarly to the second display screen Dp13, the connecting icon Im2 is displayed in the fifth region R5, the second information Im3 is displayed in the third region R3, and the seventh region R7 is blank.

On the third display screen Dp14, a warm-up window G5 (in place of the charging window G4) indicating that the secondary battery 50 is in the warm-up operation is displayed on the second region R2. The warm-up window G5 includes second information G51 including a graphic image (icon) and a text ("WARMING UP BATTERY" in the example of FIG. 7) indicating that the heater 35 is being driven (operated), and notification information G52. The second information G51 is information indicating that the heater 35 is driven and the warm-up operation is being performed. Here, the notification information G52 is information for notifying the user U1 that charging of the secondary battery 50 will not start until the temperature of the secondary battery 50 enters the operating temperature range due to the warm-up operation, and in FIG. 7, as an example, the notification information G52 includes a text "PLEASE WAIT UNTIL CHARGING STARTS."

As described above, in the present embodiment, the relevant control information is displayed in the display screen Dp1 displayed on the display device 2. Therefore, it is easy for the user U1 (operator) to intuitively grasp information regarding the relevant control regarding charging (and/or discharging) of the secondary battery 50 by viewing the display screen Dp1 displayed on the display device 2.

The relevant control information includes at least one of the first information G41 indicating that the secondary battery 50 is being charged and the second information Im3 and G51 indicating that the secondary battery 50 is being heated. As an example, in the present embodiment, the first display screen Dp12 includes only the first information G41 among the first information G41 and the second information Im3 and G51, and the second display screen Dp13 includes the first information G41 and the second information Im3 among the first information G41 and the second information Im3 and G51. The third display screen Dp14 includes only the second information Im3 and G51 among the first information G41 and the second information Im3 and G51.

Here, the first information G41 can be displayed when the temperature of the secondary battery 50 is equal to or higher than the first temperature. The second information Im3 and G51 can be displayed when the temperature of the secondary battery 50 lower than the second temperature. That is, the first information G41 is displayed on the first display screen Dp12 and the second display screen Dp13 in which the temperature of the secondary battery 50 is equal to or higher than the first temperature. The second information Im3 and G51 is displayed on the second display screen Dp13 and the third display screen Dp14 in which the temperature of the secondary battery 50 is lower than the second temperature. Therefore, for example, when the temperature of the secondary battery 50 is lower than the first temperature and lower than the second temperature, the first information G41 indicating that charging is being performed is not displayed, and the second information Im3 and G51 indicating that the warm-up operation is being performed is displayed, as in the third display screen Dp14. Therefore, the user U1 can understand that the secondary battery 50 cannot be charged immediately because the temperature of the secondary battery 50 is low, and, for example, next time, it becomes easy to take measures such as parking the work machine 3 in a sunny place (where the secondary battery 50 easily warms up).

In the present embodiment, when the temperature of the secondary battery 50 becomes equal to or higher than the third temperature while the second information Im3 and G51 is displayed, the second information Im3 and G51 is hidden. In short, when the temperature of the secondary battery 50 becomes equal to or higher than the third temperature and it is no longer necessary to heat the secondary battery 50, the warm-up operation is stopped and the second information Im3 and G51 is hidden. Therefore, the user U1 can easily grasp that the secondary battery 50 is sufficiently heated and the warm-up operation has ended.

The second information Im3 is common information for the charging and the discharging of the secondary battery 50. That is, since the second information Im3 including the graphic image (icon) indicating that the heater 35 is being driven (operated) is displayed in the third region R3, for example, the second information Im3 is common to a graphic image Im1 displayed in the third region R3 on the home screen Dp11 during the operation of the machine body 30 (during the discharge of the secondary battery 50). In this way, regardless of whether the secondary battery 50 is being charged or discharged, the graphic image Im1 and the second information Im3, which are the same, indicate that the heater 35 is being driven (operated), so that the user U1 can easily understand the meaning of the second information Im3.

In this way, since the relevant control is executed in accordance with the temperature of the secondary battery 50, the relevant control information (at least one of the first information G41 and the second information Im3 and G51) related to the relevant control is also displayed in accordance with the temperature of the secondary battery 50. Since both the charging window G4 including the first information G41 and the warm-up window G5 including the second information G51 are displayed so as to be within the second region R2, the current state information G1 displayed in the first region R1 is not hidden by the charging window G4 or the warm-up window G5. Therefore, the current state information G1 on the state of charge of the secondary battery 50 is displayed on the first display screen Dp12 and the second display screen Dp13 in which the temperature of the secondary battery 50 is equal to or higher than the first temperature, and the third display screen Dp14 in which the temperature of the secondary battery 50 is lower than the second temperature.

In short, the control method according to the present embodiment further includes displaying the current state information G1 on the current state of the secondary battery 50 regardless of the temperature of the secondary battery 50. In this wat, the user U1 can check the current state information G1 on the current state of the secondary battery 50, such as the current state of charge of the secondary battery 50, on any of the first display screen Dp12, the second display screen Dp13, and the third display screen Dp14. Therefore, the user U1 can easily understand what kind of control is being performed when charging, and can intuitively grasp how much time is required for charging from the current state of the secondary battery 50 (for example, the state of charge) and the current situation of the relevant control (whether or not charging is being performed, etc.).

Here, the relevant control information (the first information G41, the second information G51, and the like) is displayed side by side with the current state information G1. That is, in the first display screen Dp12 or the second display screen Dp13, the first information G41 as the relevant control information is displayed side by side with the current state information G1 in the transverse direction.

Similarly, in the third display screen Dp14, the second information G51 as the relevant control information is displayed side by side with the current state information G1 in the transverse direction. Therefore, the user U1 can easily check the relevant control information (the first information G41, the second information G51, and the like) and the current state information G1 together, and for example, it is easy to determine urgency of charging of the secondary battery 50.

In particular, in the second display screen Dp13 including the first information G41 and the second information Im3 as the relevant control information, the first information G41 is placed between the current state information G1 and the second information Im3. Therefore, the user U1 can easily check the first information G41 and the second information Im3 as the relevant control information together with the current state information G1, and, for example, it is easy to determine the urgency of charging of the secondary battery 50.

The current state information is displayed adjacent to the outer peripheral edge of the display screen Dp1 in the display screen Dp1 displayed on the display device 2. In the present embodiment, the current state information G1 is placed adjacent to the left edge of the outer periphery of the display screen Dp1. The current state information G1 is a graph having a length in the vertical direction along the left edge of the display screen Dp1. As a result, the current state information G1 is displayed at a position that is particularly easy to view by the user U1, and thus, for example, the urgency of charging of the secondary battery 50 can be easily determined.

Here, when the temperature of the secondary battery 50 is not within the operating temperature range suitable for the discharging of the secondary battery 50, it is preferred that the first display screen Dp12, the second display screen Dp13, the third display screen Dp14, and the like are displayed by the power supply from the external power source AC 1 to be displayed. For example, when an auxiliary power supply such as a lead storage battery different from the secondary battery 50 is mounted on the machine body 30, the first display screen Dp 12, the second display screen Dp13, the third display screen Dp14, and the like may be displayed by power supply from the auxiliary power supply.

### Flowchart

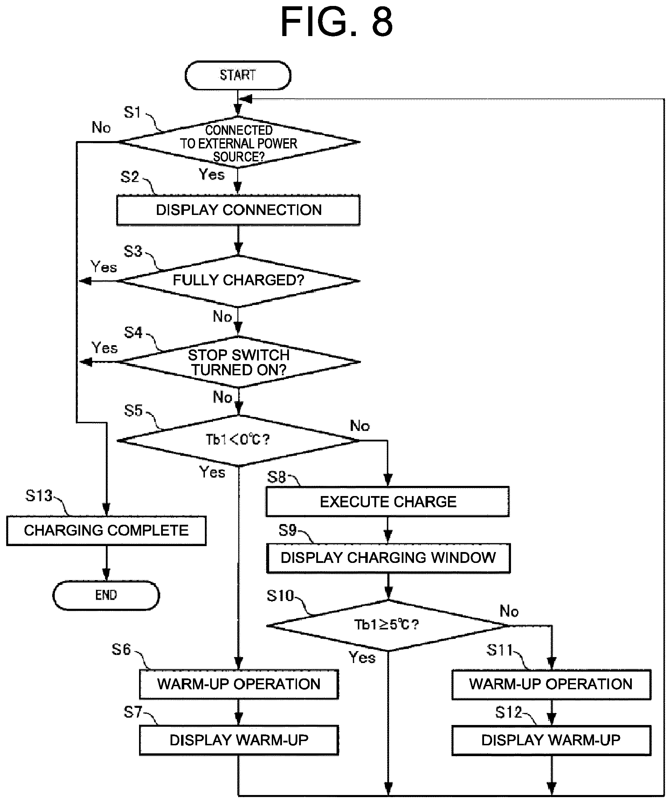

An overall flow of the processing related to the charging operation in the control method will now be explained with reference to FIG. 8. FIG. 8 is a flowchart illustrating an example of the processing related to the control method.

As illustrated in FIG. 8, the control system 1 first determines whether or not the charger 51 is electrically connected to the external power source AC1 (step S1). If the connection detection signal acquired from the charger 51 by the acquisition processing unit 11 indicates "connection" between the first connector 531 and the second connector 532, the control system 1 determines that the charger 51 is connected to the external power source AC1 (step S1: Yes), and processing transitions to step S2. Meanwhile, it the connection detection signal indicates "no connection" between the first connector 531 and the second connector 532, the control system 1 determines that the charger 51 is not connected to the external power source AC1 (step S1: No), and processing transitions to step S13 to end the charging.

In step S2, the display processing unit 13 of the control system 1 displays the connecting icon Im2 (see FIG. 5, etc.) in the fifth region R5 of the display screen Dp1. The connecting icon Im2 realizes a connection display indicating that the first connector 531 and the second connector 532 are connected to each other. The control system 1 then determines whether or not the secondary battery 50 is in a fully charged state (step S3). If the control system 1 determines that the secondary battery 50 is in the fully charged state on the basis of the SOC signal acquired by the acquisition processing unit 11 from the charger 51 (step S3: Yes), the control system 1 transitions the processing to step S13 to end the charging. Meanwhile, if it is determined that the secondary battery 50 is not in the fully charged state on the basis of the SOC signal (step S3: No), the control system 1 transitions the processing to step S4.

In step S4, the control system 1 determines whether or not a charging stop manipulation has been performed. If the charging stop switch is pressed, the control system 1 determines that the charging stop manipulation is performed (step S4: Yes), and transitions the processing to step S13 to end the charging. Meanwhile, if the charging stop switch is not pressed, the control system 1 determines that the charging stop manipulation is not performed (step S4: No), and transitions the processing to step S5.

In step S5, the control system 1 determines whether or not a temperature Tb1 of the secondary battery 50 is lower than the first temperature (here, "0°C"). If the control system 1 determines that the temperature of the secondary battery 50 is lower than 0°C by a temperature measurement signal acquired by the acquisition processing unit 11 from the temperature sensor 36 (step S5: Yes), the control system 1 transitions the processing to step S6. Meanwhile, if it is determined that the temperature of the secondary battery 50 is equal to or higher than 0°C on the basis of the temperature measurement signal (step S5: No), the control system 1 transitions the processing to step S8.

In step S6, the relevant control processing unit 12 of the control system 1 activates the heater 35 to perform the warm-up operation to heat the secondary battery 50. The display processing unit 13 of the control system 1 then causes the display device 2 to display the third display screen Dp14 (see FIG. 7) including the warm-up window G5, thereby performing display (warm-up display) of the second information Im3 and G51 indicating that the secondary battery 50 is being heated (during the warm-up operation) as the relevant control information (step S7).

In step S8, the relevant control processing unit 12 of the control system 1 activates the charger 51 to perform charging of the secondary battery 50. The display processing unit 13 of the control system 1 then causes the display device 2 to display the first display screen Dp12 (see FIG. 5) including the charging window G4, thereby displaying the first information G41 indicating that the secondary battery 50 is being charged, as the relevant control information (step S9).

In step S10, the control system 1 determines whether or not the temperature Tb1 of the secondary battery 50 is equal to or higher than the second temperature (here, "5°C"). If the control system 1 determines that the temperature of the secondary battery 50 is equal to or higher than 5°C by a temperature measurement signal acquired by the acquisition processing unit 11 from the temperature sensor 36 (step S10: Yes), the control system 1 transitions the processing to step S1. Meanwhile, if it is determined that the temperature of the secondary battery 50 is lower than 5°C on the basis of the temperature measurement signal (step S10: No), the control system 1 transitions the processing to step S11.

In step S11, the relevant control processing unit 12 of the control system 1 activates the heater 35 to perform the warm-up operation to heat the secondary battery 50. The display processing unit 13 of the control system 1 then causes the display device 2 to display the second display screen Dp13 (see FIG. 6), thereby performing display (warm-up display) of the second information Im3 indicating that the secondary battery 50 is being heated (during the warm-up operation) as the relevant control information (step S7).

In step S13, the relevant control processing unit 12 of the control system 1 controls the charger 51 to end the charging of the secondary battery 50, and the series of processes ends. At this time, if the warm-up operation is being performed, the relevant control processing unit 12 of the control system 1 also ends the warm-up operation. Furthermore, the display processing unit 13 of the control system 1 ends the display of the charging window G4 and the second information Im3.

The control system 1 repeatedly executes the processing in steps S1 to S13 explained above. However, the flowchart illustrated in FIG. 8 is merely an example, and the processing may be added or omitted as appropriate, or the order of processing may be changed as appropriate.

### Discharging Operation

An operation (discharging operation) particularly regarding discharging of the secondary battery 50 in the control method according to the present embodiment will now be described in detail.

In the present embodiment, in a state in which the first connector 531 and the second connector 532 are not connected to each other, the machine body 30 (including the traveling section 31, the turning section 32, and the work section 33) of the work machine 3 can operate. In this state, for example, when a start-up manipulation of the work machine 3, that is, an ON manipulation of the main switch, or the like is performed, the control system 1 controls the inverter 52 to drive the motor 41 and drive the hydraulic pump 42. At this time, the inverter 52 is supplied with electric power from the secondary battery 50 to drive the motor 41, so that the secondary battery 50 discharges (enters a "discharge mode").

The control method according to the present embodiment includes executing relevant control regarding at least one of charging and discharging of the secondary battery 50 in accordance with the temperature of the secondary battery 50 of the work machine 3, and displaying relevant control information relating to the relevant control. Here, at the time of the discharging operation, the relevant control is at least control regarding the discharging of the secondary battery 50. Specifically, the relevant control is various types of control regarding discharging of the secondary battery 50, and includes a discharging operation of the secondary battery 50 by controlling the inverter 52, and temperature control (warm-up operation) of the secondary battery 50 for maintaining the temperature of the secondary battery 50 within an operating temperature range suitable for discharging.

That is, according to the present embodiment, even in a state where the machine body 30 is operable, for example, when the temperature of the secondary battery 50 is low in winter or the like, the secondary battery 50 is not discharged immediately, but the warm-up operation is executed first. In such a case, it is possible to notify the user U1 (operator) of a situation in which the secondary battery 50 is not actually discharged (that is, the motor 41 is not driven) due to the warm-up operation by displaying the relevant control information. As a result, it is possible to provide a work machine control method, a work machine control program, a control system 1, and a work machine 3 that allow an operator to easily grasp the state of the secondary battery 50.

### [4] Modifications

Modifications of the first embodiment will be listed below. The modifications described below can be applied in combination as appropriate.

The control system 1 according to the disclosure includes a computer system. The computer system is mainly composed of one or more processors and one or more memories as hardware. When the processor executes a program that is stored in a memory of the computer system, the function as the control system 1 in the disclosure is implemented. The program may be recorded in a memory of the computer system in advance, may be provided through an electric communication line, or may be recorded on a non-transitory recording medium, such as a memory card, an optical disk, a hard disk drive, or the like, that is readable by the computer system. Furthermore, some or all of the functional units included in the control system 1 may be composed of an electronic circuit.

The configuration that at least some of the functions of the control system 1 are integrated in a single casing is not essential, and the components of the control system 1 may separately be provided in plural casings. On the contrary, the functions that are separately provided in the plural devices (for example, the control system 1 and the display device 2) in the first embodiment may be integrated in the single casing. Furthermore, at least some of the functions of the control system 1 may be implemented by a cloud (cloud computing) or the like.

The power source of the work machine 3 is not limited to the motor 41. The work machine 3 may be, for example, a hybrid work machine including a drive mechanism provided with multiple power sources including an engine (internal combustion engine) that generates power by combustion of fuel and the motor 41. In this case, the motor 41 and the engine are individually driven to generate power. Here, the power generated by the motor 41 and the power generated by the engine can be combined by a power transmission unit, and, for example, the motor 41 can assist the engine to generate a larger power than the engine alone. Alternatively, the power source of the work machine 3 may not include the motor 41. In this case, the electric power of the secondary battery 50 is used by an electric load (such as an air conditioner or a lighting device) other than the motor 41 mounted on the work machine 3.

The display device 2 is not limited to a dedicated device, but may be a general-purpose terminal such as a laptop computer, a tablet terminal, or a smartphone. Furthermore, the display unit 23 is not limited to a mode that directly displays a display screen, such as a liquid crystal display or an organic EL display, but may be a configuration that displays the display screen by projection, such as a projector. The display device 2 is not limited to the configuration of being mounted on the machine body 30, but, for example, may be disposed at a position away from the machine body 30 and may display the display screen by communication (wireless communication) or the like with the machine body 30.

The display mode of various information such as the relevant control information displayed by the display processing unit 13 is not limited to the display screen Dp1 displayed on the display device 2. For example, the display processing unit 13 may display the relevant control information or the like in a display mode (including lighting of a display lamp, text display, and the like) other than the display screen Dp1.

As the information input mode of the manipulation unit 22, a mode other than the push-button switch, the touchscreen, and the manipulation dial may be adopted. For example, the manipulation unit 22 may adopt an input mode such as a keyboard or a pointing device such as a mouse, a voice input mode, a gesture input mode, and an input mode of a manipulation signal from another terminal.

The warm-up operation of the secondary battery 50 is not limited to a method of indirectly heating the secondary battery 50 by heating a coolant with the heater 35, but may be, for example, a method of directly heating the secondary battery 50 by thermally coupling the heater 35 to the cell of the secondary battery 50. Since the temperature of the secondary battery 50 can be increased by repeating charging and discharging of the secondary battery 50, for example, a warm-up operation of the secondary battery 50 may be realized by control of repeating charging and discharging of the secondary battery 50. Furthermore, the relevant control may include a cooling operation of the secondary battery 50 by controlling the cooling device 34, and in this case, an operating state (including a coolant temperature or the like) of the cooling device 34 may be displayed as the relevant control information.

The control method of the work machine 3 explained above is not limited to the work machine 3, and may be applied to various vehicles, ships, flying objects, or the like.

### [Appendices]

Appended below is a summary of the invention extracted from the embodiments described above. Note that each configuration and processing function described in the appendices below may be selected, omitted, and combined as appropriate.

### <Appendix 1>

A work machine control method comprising:
executing relevant control regarding at least one of charging and discharging of a secondary battery of a work machine in accordance with a temperature of the secondary battery; and
displaying relevant control information on the relevant control.

### <Appendix 2>

The work machine control method according to Appendix 1, wherein the relevant control information is displayed in a display screen displayed on a display device.

### <Appendix 3>

The work machine control method according to Appendix 1 or 2, wherein the relevant control information includes at least one of first information and second information, the first information indicating that the secondary battery is being charged, the second information indicating that the secondary battery is being heated.

### <Appendix 4>

The work machine control method according to Appendix 3, wherein
the first information is displayable when the temperature of the secondary battery is equal to or higher than a first temperature, and
the second information is displayable when the temperature of the secondary battery is lower than a second temperature.

### <Appendix 5>

The work machine control method according to Appendix 4, wherein the second information is hidden when the temperature of the secondary battery becomes equal to or higher than a third temperature in a state where the second information is displayed.

### <Appendix 6>

The work machine control method according to any one of Appendices 3 to 5, wherein the second information is information that is common between during charging and during discharging of the secondary battery.

### <Appendix 7>

The work machine control method according to any one of Appendices 3 to 6, further comprising:
displaying guidance information on how to stop the charging of the secondary battery together with the first information.

### <Appendix 8>

The work machine control method according to any one of Appendices 1 to 7, further comprising:
displaying current state information on a current state of the secondary battery regardless of the temperature of the secondary battery.

### <Appendix 9>

The work machine control method according to Appendix 8, wherein the relevant control information is displayed side by side with the current state information.

### <Appendix 10>

The work machine control method according to Appendix 8 or 9, wherein the current state information is displayed adjacent to an outer peripheral edge of a display screen and in the display screen, the display screen being displayed at the display device.

### <Appendix 11>

A work machine control program that causes one or more processors to execute the work machine control method according to any one of Appendices 1 to 10.

### REFERENCE SIGNS LIST

1: work machine control system
2: display device
3: work machine
12: relevant control processing unit
13: display processing unit
30: machine body
50: secondary battery
Dp1: display screen
G1: current state information
G41: first information (relevant control information)
G42: guidance information
G51, Im3: second information (relevant control information)

## Claims

1. A work machine control method comprising:
executing relevant control regarding at least one of charging and discharging of a secondary battery of a work machine in accordance with a temperature of the secondary battery; and
displaying relevant control information on the relevant control.

2. The work machine control method according to claim 1, wherein the relevant control information is displayed in a display screen displayed on a display device.

3. The work machine control method according to claim 1 or 2, wherein the relevant control information includes at least one of first information and second information, the first information indicating that the secondary battery is being charged, the second information indicating that the secondary battery is being heated.

4. The work machine control method according to claim 3, wherein the first information is displayable when the temperature of the secondary battery is equal to or higher than a first temperature, and the second information is displayable when the temperature of the secondary battery is lower than a second temperature.

5. The work machine control method according to claim 4, wherein the second information is hidden when the temperature of the secondary battery becomes equal to or higher than a third temperature in a state where the second information is displayed.

6. The work machine control method according to claim 3, wherein the second information is information that is common between during charging and during discharging of the secondary battery.

7. The work machine control method according to claim 3, further comprising:
displaying guidance information on how to stop the charging of the secondary battery together with the first information.

8. The work machine control method according to claim 1 or 2, further comprising:
displaying current state information on a current state of the secondary battery regardless of the temperature of the secondary battery.

9. The work machine control method according to claim 8, wherein the relevant control information is displayed side by side with the current state information.

10. The work machine control method according to claim 8, wherein the current state information is displayed adjacent to an outer peripheral edge of a display screen and in the display screen, the display screen being displayed at the display device.

11. A work machine control program for causing one or more processors to execute the work machine control method according to claim 1 or 2.

12. A work machine control system comprising:
a relevant control processing unit that executes relevant control regarding at least one of charging and discharging of a secondary battery of a work machine in accordance with a temperature of the secondary battery; and
a display processing unit that displays relevant control information on the relevant control.

13. A work machine comprising:
the work machine control system according to claim 12; and
a machine body on which a display device displaying the relevant control information is installed.
